(19) Europäisches Patentamt
European Patent Office
Office européen des brevets

(11) **EP 2 494 644 B1**

(12) **FASCICULE DE BREVET EUROPEEN**

(45) Date de publication et mention de la délivrance du brevet:
**10.12.2014 Bulletin 2014/50**

(21) Numéro de dépôt: **10773895.7**

(22) Date de dépôt: **27.10.2010**

(51) Int Cl.:
***H01M 8/04*** *(2006.01)*   ***H01M 8/10*** *(2006.01)*

(86) Numéro de dépôt international:
**PCT/EP2010/066263**

(87) Numéro de publication internationale:
**WO 2011/051341 (05.05.2011 Gazette 2011/18)**

(54) **PROCEDURE DE DETECTION DE L'ETAT DE PERMEABILITE DE LA MEMBRANE POLYMERE ECHANGEUSE D'IONS D'UNE PILE A COMBUSTIBLE.**

VERFAHREN ZUR ERKENNUNG DES PERMEABILITÄTSZUSTANDES DER IONENAUSTAUSCHPOLYMERMEMBRAN EINER BRENNSTOFFZELLE

METHOD FOR DETECTING THE PERMEABILITY STATE OF THE ION EXCHANGER POLYMER MEMBRANE OF A FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2009 FR 0957646**

(43) Date de publication de la demande:
**05.09.2012 Bulletin 2012/36**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeur: **PAGANELLI, Gino**
**1741 Cottens (CH)**

(74) Mandataire: **Roussy, Delphine**
**Manufacture Française des Pneumatiques Michelin**
**23, place des Carmes-Déchaux**
**DGD/PI - F35 - Ladoux**
**63040 Clermont-Ferrand Cedex 9 (FR)**

(56) Documents cités:
**WO-A1-2006/012954     WO-A1-2009/041271**
**JP-A- 2009 146 651     US-A1- 2002 076 583**
**US-A1- 2004 124 843     US-A1- 2009 220 832**

# Description

*DOMAINE DE L'INVENTION*

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

*ETAT DE LA TECHNIQUE*

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

Il est très important d'avoir en permanence une évaluation précise de la perméabilité de la membrane échangeuse d'ions de chaque cellule d'une pile à combustible de façon à suivre son état de vieillissement et pour pouvoir en cesser l'utilisation si la sécurité était compromise. Si le principe de mesure de la perméabilité d'une membrane échangeuse d'ions par différence de pression est classique, on ne connaît en pratique que des méthodes d'investigations qui imposent, d'utiliser un équipement approprié et une procédure manuelle. Par exemple, on utilise une bouteille d'azote externe que l'on branche à l'un des circuits anodique ou cathodique et l'on observe la fuite de gaz vers l'autre circuit.

La demande de brevet US 2004/124843 propose une méthode pour évaluer la perméabilité individuelle de chaque membrane échangeuse d'ions d'une pile à combustible. Pour cela, l'anode est alimentée en hydrogène ; la cathode est alimentée en azote ou en un autre gaz neutre. Selon l'équation de Nernst's, la différence de nature de gaz de part et d'autre de la membrane génère une différence de potentiel dépendant entre autre de la nature et de la concentration ou pression partielle de ces gaz. Il apparaît que si une membrane est particulièrement perméable, l'hydrogène va diffuser côté cathode et inversement, modifiant ainsi la nature du mélange gazeux de part et d'autre de la membrane et par conséquent modifiant aussi la différence de potentielle mesurée sur cette cellule. Cette méthode procède à une mesure de tension et procède à une mesure de la pression régnant dans le circuit anodique et de la pression régnant dans le circuit cathodique et procède à une mesure de température pour résoudre l'équation de Nernst's, afin de déceler si une ou plusieurs membranes montées au sein d'une pile à combustible présentent un défaut de perméabilité.

Cependant, cette méthode présente les difficultés de mise en oeuvre suivantes :

- la différence de potentielle théorique avec de l'hydrogène pur à l'anode et de l'azote pur à la cathode est au maximum de quelques dizaines de mV, ce qui implique un appareillage de mesure de tension très précis ;
- l'évaluation de la perméabilité implique des mesures de débit, ce qui en pratique est difficilement réalisable avec une grande précision pour les mélanges gazeux ;
- la moindre trace d'oxygène résiduel à la cathode peut générer une différence de tension bien supérieure au niveau de tension attendu et donc fausser la mesure ; or il est bien connu qu'en pratique, il est très difficile de garantir la disparition totale d'un gaz surtout en présence d'un support absorbant comme l'élément de diffusion des gaz (désigné en général par GDL pour « gas diffusion layer ») contenu dans les assemblages de membranes et électrodes (MEA);
- enfin cette méthode implique une mise en condition particulière du système et la disponibilité d'une source d'azote ou autre gaz neutre ; elle est donc difficilement automatisable, surtout dans le cadre d'applications embarquées.

La demande de brevet WO2006/012954 décrit une procédure sans phase d'injection d'azote, comportant une phase de mise à l'atmosphérique du circuit cathodique. La pile à combustible décrite dans ce texte ne contient pas de pompe de gavage pour l'injection d'air. Il en résulte que la pression à la cathode ne peut pas être élevée au dessus de la pression atmosphérique. Le différentiel de pression avec l'anode ne sera donc pas suffisant pour procéder à la mesure automatique de perméabilité des membranes. De plus, l'évaluation de la perméabilité des membranes échangeuses d'ions d'une pile à combustible reste totalement étrangère à la divulgation de ce document.

La demande de brevet US2009/0220832 propose une pile à combustible comportant une boucle de recirculation à la cathode et à l'anode et des vannes et clapets pour isoler les circuits internes de la pile de l'air atmosphérique. Cependant, l'agencement des éléments proposé et la procédure décrite visent à inonder les circuits de la pile avec de l'hydrogène quasi pur, ce qui n'est ni sûr ni économique. De plus, l'évaluation de la perméabilité des membranes échangeuses d'ions d'une pile à combustible reste totalement étrangère à la divulgation de ce document.

Le document JP 2009 146651 A décrit, par ailleurs, une procédure de détection d'une fuite de gaz carburant dans une pile à combustible.

L'objectif de la présente invention est de pouvoir mesurer la perméabilité de la membrane échangeuse d'ions des cellules d'une pile à combustible de façon automatique, après chaque extinction, pour le suivi et le diagnostic d'une pile à combustible et cela sans matériel ajouté seulement pour assurer une fonction de surveillance, sans apporter d'utilité pour le fonctionnement normal de la pile à combustible.

*BREVE DESCRIPTION DE L'INVENTION*

L'invention propose une procédure de détection de l'état de perméabilité de la membrane polymère échangeuse d'ions d'une pile à combustible, tel que décrit dans revendication 1.

En effet, le déposant a observé que, lorsque la dynamique, avec laquelle la pression régnant dans le circuit anodique et la pression régnant dans le circuit cathodique s'équilibrent, présente des signes caractéristiques pré-identifiés dont la suite donne des exemples précis, la perméabilité de la membrane polymère échangeuse d'ions devient trop importante, ce qui peut altérer la sécurité, le rendement et la durabilité.

L'invention part de l'observation que le temps nécessaire pour que les pressions s'équilibrent entre les circuits de gaz côté anode et côté cathode peut avantageusement donner une indication de la perméabilité des membranes. La perméabilité des membranes est en effet un paramètre très révélateur de l'état de santé d'une pile à combustible. Donc dans des conditions où la nature des gaz présents de part et d'autre de la membrane est contrôlée et ne permet pas de réaction électrochimique et leur pression respective est suffisamment différente, par exemple après chaque arrêt en appliquant une procédure qui permet d'amener la pile à combustible dans cette situation favorable à la mesure de vieillissement visée, l'évolution dans le temps de la différence de pression est un excellent indicateur du vieillissement de la pile à combustible.

De préférence, la procédure de détection de l'état de perméabilité de la membrane polymère échangeuse d'ions d'une pile à combustible est précédée d'une procédure d'arrêt de la pile à combustible, la pile à combustible délivrant une tension électrique sur une ligne électrique de puissance (10), la procédure d'arrêt comprenant les actions suivantes :

- (i) coupure de l'alimentation en gaz carburant et en gaz comburant, et
- (ii) maintien d'un prélèvement de courant tant qu'un révélateur approprié indique que le gaz comburant dans le système d'alimentation en gaz comburant n'est pas suffisamment consommé ;
- (iii) injection de gaz enrichi en azote dans le système d'alimentation en gaz comburant.

Les actions (i), (ii) et (iii) pourraient être toutes concomitantes. Pour une meilleure compréhension, dans la description qui suit, les actions (ii) et (iii) sont des étapes successives, les deux actions (i) et (ii) étant concomitantes. Il est utile de prévoir en outre, après l'action (iii), une étape d'aspiration de gaz carburant, comme cela est également montré dans la description de la procédure d'arrêt illustrant l'invention.

Grâce à la procédure d'arrêt proposée ci-dessus, l'hydrogène ne diffuse à la cathode que très lentement, à travers la membrane polymère échangeuse d'ions, et au terme de l'extinction, c'est-à-dire après que tout l'oxygène aura été consommé et que le circuit à la cathode aura été rempli d'azote. L'oxygène et l'hydrogène ne cohabitent donc jamais en quantité significative. L'alimentation d'hydrogène est interrompue dès le début de la procédure et simultanément ou quasi simultanément à la coupure de l'alimentation en gaz comburant; si l'action d'interruption de l'alimentation en gaz carburant pourrait être quelque peu différée par rapport à l'action d'interruption de l'alimentation en gaz comburant, elle ne peut l'être significativement. La suite ne s'attache à décrire que le cas où l'alimentation en gaz comburant et en gaz carburant sont interrompues simultanément, ce qui est plus simple à commander et donne des résultats tout à fait satisfaisants. L'intégralité de l'hydrogène résiduel à l'anode est parcimonieusement utilisée pour garantir le mélange H2/N2 souhaité.

Notons que la procédure d'arrêt proposée ci-dessus s'étend à une pile à combustible dans laquelle la chambre d'accumulation additionnelle de gaz carburant pourrait être disposée à n'importe quel endroit du circuit d'alimentation en gaz carburant, c'est-à-dire à n'importe quel endroit entre la vanne de coupure et la pile à combustible, même sur le circuit de recyclage, ou sur le circuit entre le séparateur d'eau et l'éjecteur. Cependant il est intéressant de la placer à un endroit du circuit où la pression est plus élevée afin d'en réduire le volume, comme spécifié dans la description de la pile à combustible ci-dessus.

De préférence, pour la mise en oeuvre de l'invention, la pile à combustible comporte à la fois une alimentation en oxygène pressurisé provenant d'un réservoir de stockage pour l'oxygène et un dispositif de remplissage en air atmosphérique pressurisé et un circuit de recyclage branché à la sortie du circuit cathodique de la pile à combustible.

Dans la suite de la description, on illustre l'invention en considérant une pile à combustible alimentée en oxygène pur comme gaz comburant. Cet aspect cependant n'est pas limitatif, l'invention pouvant aussi s'appliquer aux piles à combustible alimentées en air ambiant. Le mode de réalisation décrit (alimentation en oxygène pur) favorise la compacité de la pile à puissance donnée, ce qui constitue un mode de réalisation favorable pour les applications aux véhicules de transport, en particulier les véhicules automobiles.

Dans tous les cas, en ce qui concerne l'électrolyte, l'invention s'applique aux piles à combustible du type à électrolyte sous la forme d'une membrane polymère (c'est à dire de type PEFC pour Polymer Electrolyte Fuel Cell). Le générateur d'électricité et la procédure d'arrêt décrits ci-dessous s'avèrent particulièrement aptes à être installés et mis en oeuvre dans un véhicule automobile.

*BREVE DESCRIPTION DES FIGURES*

La suite de la description permet de bien faire comprendre tous les aspects de l'invention au moyen des dessins joints dans lesquels :

- la figure 1 est un schéma d'un générateur d'électricité utilisant une pile à combustible alimentée en oxygène pur ;
- la figure 2 montre l'évolution de différents paramètres au cours de l'extinction d'une pile à combustible ;
- La figure 3 montre l'évolution des pressions après une extinction et illustre le principe de mesure de la perméabilité
- la figure 4 montre un organigramme de la procédure de détection de l'état de perméabilité de la membrane polymère échangeuse d'ions selon l'invention.

*DESCRIPTION DE MEILLEURS MODES DE REALISATION DE L'INVENTION*

Pour des raisons de sécurité, les piles à combustible sont en général équipées d'une vanne de coupure en H2 qui reste fermée lors des arrêts. Dans ce cas, il n'est pas possible de prélever l'H2 dans le réservoir pendant la procédure d'extinction. La pile à combustible doit donc fonctionner avec uniquement l'hydrogène résiduel dans ses canaux, les tubulures, les réservoirs internes de déshumidification et autres éléments de la ligne d'alimentation allant de la vanne de sécurité jusque la pile à combustible proprement dite, ces éléments étant désignés dans la suite en général comme le circuit d'alimentation de la pile à combustible.

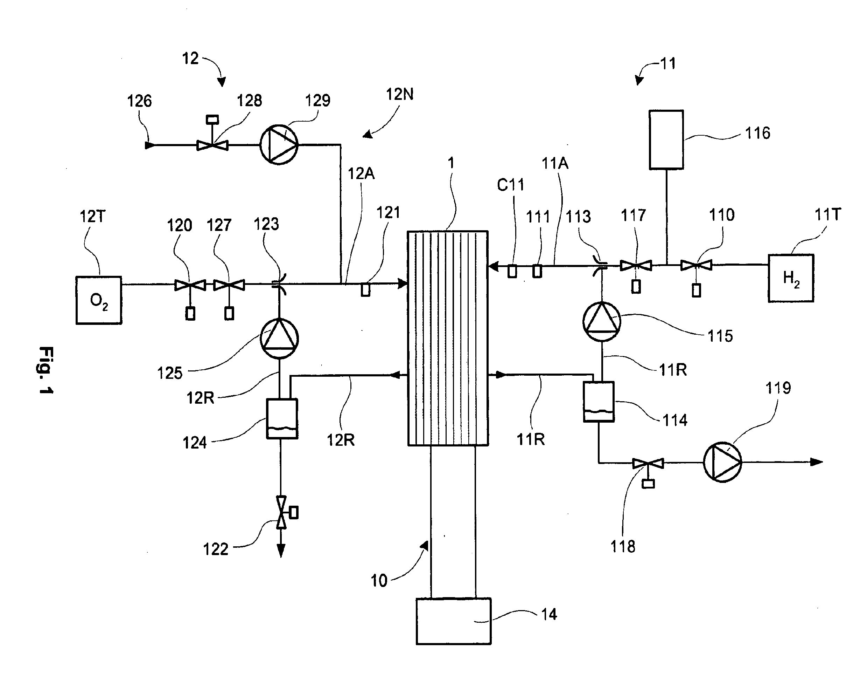

A la figure 1, on voit une pile à combustible 1 du type à électrolyte sous la forme d'une membrane polymère (c'est à dire de type PEFC pour Polymer Electrolyte Fuel Cell ou PEM pour Proton Exchange Membrane). La pile à combustible 1 est approvisionnée par deux gaz, à savoir le carburant (l'hydrogène stocké ou fabriqué à bord du véhicule) et le comburant (l'oxygène pur) qui alimentent les électrodes des cellules électrochimiques. Une charge électrique 14 est branchée à la pile à combustible 1 par une ligne électrique 10. Pour simplifier, la figure 1 ne représente que les éléments des circuits de gaz utiles à la compréhension de l'invention.

*Description du circuit anodique :*

L'installation comporte un circuit d'alimentation 11 en gaz carburant coté anodes. On voit un réservoir 11T d'hydrogène pur $H_2$ relié à l'entrée du circuit anodique de la pile à combustible 1 au moyen d'une canalisation d'alimentation qui passe par une vanne de coupure 110, puis par un éjecteur 113, puis par un canal d'alimentation 11A en gaz carburant aboutissant aux cathodes. Une sonde de pression 111 est installée sur canal d'alimentation 11A juste avant l'entrée dans la pile à combustible 1. Fait partie du circuit d'alimentation 11 en hydrogène (le carburant) un circuit de recyclage 11R de l'hydrogène non consommé par la pile à combustible, branché à la sortie du circuit anodique de la pile à combustible 1. Un séparateur d'eau 114 est installé sur le circuit de recyclage 11R. L'éjecteur 113 ainsi qu'une pompe de re-circulation 115 assurent le recyclage de l'hydrogène non consommé et le mélange à de l'hydrogène frais en provenance du réservoir.

On voit aussi une chambre d'accumulation additionnelle 116 disposée sur la tuyauterie du circuit d'alimentation 11 en gaz carburant, entre la vanne de coupure 110 et une vanne de régulation de pression 117. La chambre d'accumulation additionnelle est, dans ce mode préféré de réalisation, placée là où la pression est la plus élevée dans le circuit d'alimentation, de façon à en amoindrir le volume, ou à volume identique, de façon à stoker une plus grande quantité d'hydrogène. Notons que la chambre d'accumulation additionnelle 116 pourrait être disposée à n'importe quel endroit du circuit d'alimentation en gaz carburant, c'est-à-dire à n'importe quel endroit entre la vanne de coupure 110 et la pile à combustible 1, même sur le circuit de recyclage 11R, ou sur le circuit entre le séparateur d'eau 114 et l'éjecteur 113. Cependant il est intéressant de la placer à un endroit du circuit où la pression est plus élevée afin d'en réduire le volume.

On voit également une pompe d'aspiration 119 et une vanne de coupure 118 installés sur une canalisation aboutissant à l'atmosphère et branchée sous le séparateur d'eau 114. Le branchement à cet endroit, montré à la figure 1, permet en commandant la vanne de coupure 118 d'assurer la triple fonction d'évacuation de l'eau, de purge, et d'aspiration de l'hydrogène. Cependant, ce détail de réalisation n'est pas limitatif. Pour assurer la fonction d'aspiration de l'hydrogène plus spécifique de la présente invention, la canalisation comportant la vanne de coupure 118 pourrait être branchée en dérivation à la canalisation reliant le séparateur 114 et la pompe de re-circulation 115.

Un capteur de concentration d'hydrogène C11 peut avantageusement être introduit dans le circuit anodique de façon à surveiller la non pénurie d'hydrogène pendant la procédure d'extinction, et le cas échéant, à limiter l'introduction d'air par une pompe de gavage (voir description du circuit cathodique), ce qui peut se produire par exemple si la pression hydrogène est anormalement basse et ne garantit pas la quantité suffisante d'hydrogène pour terminer la procédure d'extinction. Un tel capteur d'hydrogène C11 est implanté comme montré à la figure 1.

*Description du circuit cathodique :*

L'installation comporte aussi un circuit d'alimentation 12 en gaz comburant coté cathodes. On voit un réservoir 12T d'oxygène pur $O_2$ relié à l'entrée du circuit cathodique de la pile à combustible 1 au moyen d'une canalisation d'alimentation qui passe par une vanne de coupure 120, puis par une vanne de régulation de pression 127, puis par un éjecteur 123, puis par un canal d'alimentation 12A en gaz comburant aboutissant aux cathodes. Une sonde de pression 121 est installée sur le canal d'alimentation 12A juste avant l'entrée dans la pile à combustible 1. Fait partie du circuit d'alimentation 12 en oxygène un circuit de recyclage 12R de l'oxygène non consommé par la pile à combustible, branché à la sortie du circuit cathodique de la pile à combustible 1. Un séparateur d'eau 124 est installé sur le circuit de recyclage 12R. L'éjecteur 123 ainsi qu'une pompe de recirculation 125 assurent le recyclage de l'oxygène non consommé et le mélange à l'oxygène frais en provenance du réservoir.

Une vanne de purge 122 est raccordée au fond du séparateur d'eau 124 ; ainsi, elle assure la double fonction d'évacuation de l'eau et de mise à l'atmosphère le circuit d'oxygène. En variante, on pourrait raccorder cette vanne de purge 122 juste à la sortie des gaz de la pile à combustible 1, en dérivation sur la canalisation entre la pile à combustible 1 et le séparateur d'eau 124, si l'on souhaite mettre à l'atmosphère le circuit d'oxygène indépendamment d'une vidange de l'eau dans le séparateur d'eau 124. Il va sans dire que, dans tous les cas, la fonction de vidange d'eau du séparateur d'eau 124 et du séparateur d'eau 114 doit être assurée.

La pile à combustible selon l'invention comporte un dispositif de remplissage 12 en air atmosphérique pressurisé du circuit cathodique. Le dispositif de remplissage 12 comporte les éléments suivants : une canalisation débutant par un orifice d'admission d'air 126 et, installés sur ladite canalisation, une vanne de coupure 128 et une pompe de gavage 129, la canalisation aboutissant sur le circuit d'alimentation en oxygène, juste en amont de la pile à combustible 1. Soulignons que le dispositif de remplissage 12 en air atmosphérique pourrait aboutir à n'importe quel endroit de la boucle du circuit d'alimentation 12 en gaz comburant formée par le circuit de recyclage 12R et par la canalisation reliant l'éjecteur 123 à la pile à combustible 1.

*Description d'une Procédure d'extinction préférée :*

La procédure décrite ci-dessous permet d'éteindre la pile à combustible de façon à garantir un stockage avec un mélange d'hydrogène et d'azote à l'intérieur, et cela, sans nécessiter de bouteille d'azote. Cette procédure est préconisée parce qu'elle se termine en laissant naturellement la pile à combustible avec un différentiel de pression suffisant entre l'anode et la cathode pour pouvoir réaliser la mesure d'état de perméabilité des membranes. De plus elle favorise des conditions stables en termes de nature de gaz, d'humidité, de pression et de température, ce qui garantit une meilleure répétabilité de la mesure d'état de perméabilité des membranes.

La procédure d'arrêt est composée essentiellement de 3 phases, résultats des différentes commandes qui ont été exposées :

- 1ère phase : phase de consommation de l'oxygène résiduel, qui se produit à partir de la coupure de l'alimentation en gaz carburant et en gaz comburant, et par un prélèvement de courant $I_S$ aux bornes de la pile à combustible ; on maintient ce prélèvement de courant $I_S$ tant qu'un révélateur approprié indique que le gaz comburant dans le système d'alimentation en gaz comburant n'est pas suffisamment consommé ; un révélateur approprié est par exemple la pression dans le circuit cathodique ;

- 2ème phase : phase de neutralisation, qui se produit en remplissant le circuit cathodique d'azote ; dans le mode de réalisation décrit ici, l'azote est celui de l'air atmosphérique ; on procède donc à une injection forcée d'air atmosphérique, ce qui apporte à nouveau un peu d'oxygène dont il faut contrôler la consommation ;

- 3ème phase, optionnelle, pendant laquelle, après l'arrêt total des processus électrochimiques, en retirant de façon forcée un éventuel excès de gaz carburant (ici, aspiration forcée de l'hydrogène excédentaire) ; soulignons que, grâce à l'invention, cette aspiration ne se fait qu'après avoir amené la pile à combustible dans un état où l'on a pris les précautions permettant d'éviter la sous alimentation en hydrogène dont on connaît les graves inconvénients.

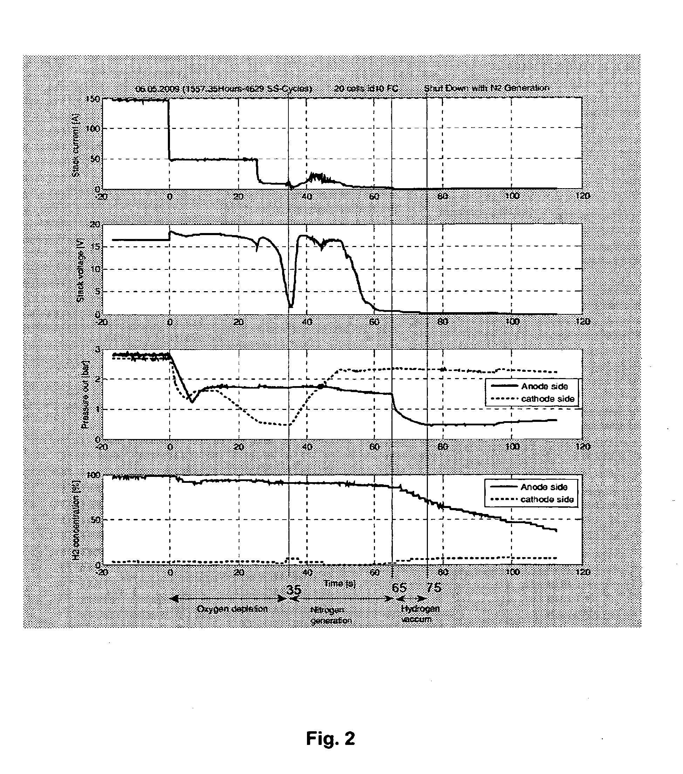

La figure 2 illustre l'enchaînement des trois phases lors d'un arrêt réellement mesuré sur une pile à combustible de 20 cellules de 300cm2 de surface active fonctionnant à l'oxygène pur. L'axe des abscisses indique le temps en secondes avec comme référence (0) l'instant où la procédure d'arrêt commence. Cette figure représente l'évolution des grandeurs suivantes en fonction du temps lors d'un arrêt avec génération d'azote :

- courbe 1, dont l'axe des ordonnées est repéré par « Stack current [A] » :

    courant prélevé sur la pile à combustible, exprimé en Ampères ;

- courbe 2, dont l'axe des ordonnées est repéré par « Stack voltage [V] » :

    tension électrique totale aux bornes de la pile à combustible, exprimée en Volts ;

- courbe 3, dont l'axe des ordonnées est repéré par « Pressure out [bar] » :

> pression régnant dans le compartiment anode (hydrogène : trait continu) et dans le compartiment cathode (oxygène : trait pointillé), exprimées en bara ;

- courbe 4, dont l'axe des ordonnées est repéré par « H2 concentration [%] » :

> concentration d'hydrogène dans le compartiment anode (hydrogène : trait continu) et dans le compartiment cathode (oxygène : trait pointillé), exprimées en pourcentage.

Lors de la première phase de l'extinction (0 à 35s, marquée « Oxygen depletion » à la figure 2), à partir du moment où l'alimentation en oxygène est coupée (en fermant la vanne de coupure 120, au même instant que la fermeture de la vanne de coupure 110 coupant l'alimentation en hydrogène), l'oxygène pur résiduel dans la pile à combustible est d'abord partiellement évacué à l'atmosphère par l'ouverture momentanée de la vanne de purge 122, puis le restant consommé en prélevant un courant. Comme l'indique la première courbe, ce courant est d'abord établi à 50A puis il est réduit en même temps que certaines cellules de la pile à combustible commencent à descendre en tension et s'annule finalement à 35s lorsque la tension de la pile à combustible approche de 0V. La troisième courbe indique que la pression dans le compartiment oxygène descend à moins de 500 mbara (comme cela est d'usage dans le domaine des piles à combustible, « mbara » signifie « milli bar absolu, la dernière lettre « a » signifiant « absolu »). Par contre, en dépit de la consommation liée à la production de courant, la pression d'hydrogène demeure à 1.75 bara grâce à la présence du réservoir tampon d'hydrogène 116.

Comme déjà souligné dans la partie introductive de cette demande de brevet, la procédure d'extinction selon l'invention peut aussi s'appliquer aux piles à combustible alimentées en air ambiant. Pour mettre en oeuvre la procédure d'arrêt proposée par l'invention pour une pile à combustible alimentée en air, contrairement au schéma habituel d'alimentation d'une telle pile à combustible, le circuit de gaz comburant doit comporter une boucle permettant de faire circuler l'air non consommé par la pile à combustible au moins pendant la procédure d'arrêt. Fait donc partie du circuit d'alimentation 11 en air un circuit de recyclage 12R de l'air non consommé par la pile à combustible, branché à la sortie du circuit cathodique de la pile à combustible 1, avant un retour et un branchement direct (sans éjecteur, ni séparateur d'eau inutiles dans cette configuration) sur la canalisation d'alimentation.

Revenons à la description de la procédure d'arrêt pour une pile à combustible alimentée en oxygène pur. A l'instant 35s (« 35 » sur l'axe des temps à la figure 2) la pompe de gavage 129 en air est activée pour pressuriser le circuit cathodique à une pression constante de 2.2 bara (paramètre 1) qui est atteinte à 50s. L'oxygène ainsi amené provoque la remontée en tension de la pile à combustible. Un courant est à nouveau prélevé jusqu'à ce que la tension de la pile à combustible s'annule à nouveau. Pendant ce temps, la pompe de gavage 129 est contrôlée pour maintenir une pression constante.

Au passage, rappelons que toutes les courbes détaillées ci-dessous sont relatives à une pile à combustible alimentée en oxygène pur comme comburant, le gaz enrichi en azote étant l'air atmosphérique. Cependant, soulignons d'une part que le gaz enrichi en azote pourrait être de l'azote pur et que bien entendu, dans ce cas, les courbes auraient une allure différente après l'instant « 35 secondes » puisque l'injection d'azote ne serait pas accompagnée d'un nouvel apport d'oxygène.

Revenons au cas décrit, à savoir le cas d'une pile à combustible alimentée en oxygène pur comme comburant. A mesure que le courant est consommé, l'air présent à la cathode s'appauvrit de plus en plus en oxygène pour finalement ne contenir que majoritairement de l'azote comme révélé par l'annulation de la tension aux bornes de la pile à combustible à l'instant 65s.

A ce moment (65 secondes après la coupure des alimentations en oxygène (120) et en hydrogène (110)), la pompe de gavage 129 en air est arrêtée et la pompe d'aspiration 119 d'hydrogène est activée afin d'évacuer l'excédent d'hydrogène. La pompe d'aspiration 119 est activée jusqu'à ce que la pression d'hydrogène atteigne 0.5 bara (paramètre 2). Cette pression est atteinte à l'instant 75s. La procédure est alors terminée, la pompe de gavage 129 et la pompe d'aspiration 119 sont arrêtées et les vannes de coupure 118 et 128 sont fermées.

Pendant la totalité de la procédure d'extinction, la pompe de recirculation 125 coté cathode est maintenue en fonctionnement de façon à assurer une bonne homogénéité du gaz et assurer la consommation complète de l'oxygène en évitant l'apparition de zones avec localement une plus forte concentration en oxygène. La pompe de recirculation 115 coté anode est aussi maintenue en fonctionnement de façon à éviter toute pénurie locale d'hydrogène. Pendant toute la durée de l'extinction, la pénurie d'hydrogène est évitée comme l'indique la concentration d'hydrogène représentée sur la quatrième courbe. La concentration reste supérieure à 85% dans le circuit anodique jusqu'à l'instant 65s où l'on commence l'aspiration d'hydrogène.

Dans la procédure décrite plus haut, les deux premières phases (Consommation de l'oxygène résiduel et neutralisation par injection d'azote) interviennent de façon successive. Toutefois, elles peuvent tout à fait être concomitantes. Pour une plus grande rapidité d'extinction, il est souhaitable de les faire intervenir simultanément. La dernière phase (aspiration de l'hydrogène excédentaire) n'est pas toujours indispensable. Le tampon d'hydrogène peut en effet être dimensionné pour que la procédure se termine avec la quantité d'hydrogène souhaitée comme expliqué ci-dessous.

Le volume interne du circuit d'alimentation 11 en gaz carburant est dimensionné de façon à être supérieur au volume interne du circuit d'alimentation 12 en gaz comburant et, en fonctionnement normal, la pression régnant dans le circuit d'alimentation 12 en gaz comburant et la pression régnant dans le circuit d'alimentation en gaz carburant 11 sont telles que, compte tenu du volume interne du circuit d'alimentation 12 en gaz comburant et du volume interne du circuit d'alimentation 11 en gaz carburant, le nombre de môles de gaz carburant toujours disponible au début du processus d'extinction dans le circuit d'alimentation en gaz carburant est supérieur ou égal au double du nombre de môles d'oxygène consommé dans le circuit d'alimentation en gaz comburant pendant la totalité de la procédure d'extinction, c'est à dire jusqu'à ce que le circuit cathodique soit essentiellement rempli d'azote à la pression souhaitée.

Ainsi, par une adaptation simple à calculer et à mettre en oeuvre, on peut s'assurer que le circuit d'alimentation en gaz carburant comporte toujours suffisamment de gaz pour que l'extinction de la pile à combustible résulte de l'épuisement en oxygène au circuit d'alimentation en gaz comburant.

Voyons comment procéder au calcul des volumes des circuits anodique 12 et cathodique 11. Soit $m_{o2}$ la quantité d'oxygène, exprimé par exemple en moles, devant être totalement consommée pendant la totalité de l'extinction. Il s'agit de l'oxygène résiduel dans le circuit cathode au début de l'extinction, moins la quantité qu'il est possible de purger, plus la quantité qui est introduite avec l'air introduit par la pompe de gavage 129 pour générer l'azote.

Puisque la consommation de gaz est deux fois plus importante coté hydrogène, les volumes des circuits anode et cathode doivent être dimensionnés pour garantir que :

$$m_{h2} \geq 2 \times m_{o2} + res_{h2}$$

avec $m_{h2}$ étant la quantité d'hydrogène, exprimée en moles, disponible au début de l'extinction dans le volume interne du circuit d'alimentation en gaz carburant (tuyaux, canaux, plaques bipolaires, ligne d'alimentation en aval de la vanne de coupure 110) et $res_{h2}$ étant la quantité d'hydrogène résiduel souhaité, exprimé également en moles. La quantité d'hydrogène $m_{h2}$ finalement nécessaire sera obtenue en ajustant le volume de la chambre d'accumulation additionnelle 116.

Les quantités $m_{o2}$ et $m_{h2}$ sont certes liées au volume des circuits correspondants qu'il faut dimensionner mais elles dépendent aussi de la pression y régnant. Il s'agit d'une approche simplifiée puisqu'il faudrait normalement aussi tenir compte de la température du gaz et de la non-linéarité de la densité d'hydrogène en fonction de la pression. Cependant la prise en compte de la pression s'avère suffisante pour la précision recherchée. Le calcul des volumes doit être réalisé pour les conditions de pression et de température les plus défavorables pouvant être rencontrées, c'est à dire pression minimum possible dans le circuit d'hydrogène au début de l'extinction et pression maximum résiduel possible dans le circuit d'oxygène.

Toutefois en cas de variation de pression d'alimentation le déroulement de la procédure avec un excédent d'hydrogène et une aspiration finale garantit la non pénurie d'hydrogène et également une meilleure reproductibilité des conditions finales.

A la fin (75 secondes après la coupure des alimentations en oxygène et en hydrogène) de la procédure d'arrêt, il subsiste une différence de pression entre l'anode et la cathode, dans l'exemple ci-dessus 2.2 bara à la cathode et 0.5 bara à l'anode. Le temps nécessaire pour que les pressions s'équilibrent est avantageusement exploité pour donner une indication de la perméabilité des membranes. La perméabilité des membranes est en effet un paramètre très révélateur de l'état de santé d'une pile à combustible. En outre, l'apparition non détectée de trous dans les membranes compromet également la sécurité. Dès lors, la surveillance régulière de leur perméabilité est également utile pour la sécurité.

Par exemple, après chaque arrêt, dès que la différence de pression tombe à 500mbar, l'unité de commande de la pile à combustible mesure la variation de pression dans les 60 secondes qui suivent. La valeur obtenue évolue avec le vieillissement de la pile à combustible et constitue un excellent indicateur.

Si le principe de mesure de la perméabilité par différence de pression est classique, l'intérêt de l'invention est d'offrir la possibilité de pouvoir mesurer la perméabilité de façon automatique, après chaque extinction, ce qui est un avantage considérable pour le suivi et le diagnostic d'une pile à combustible.

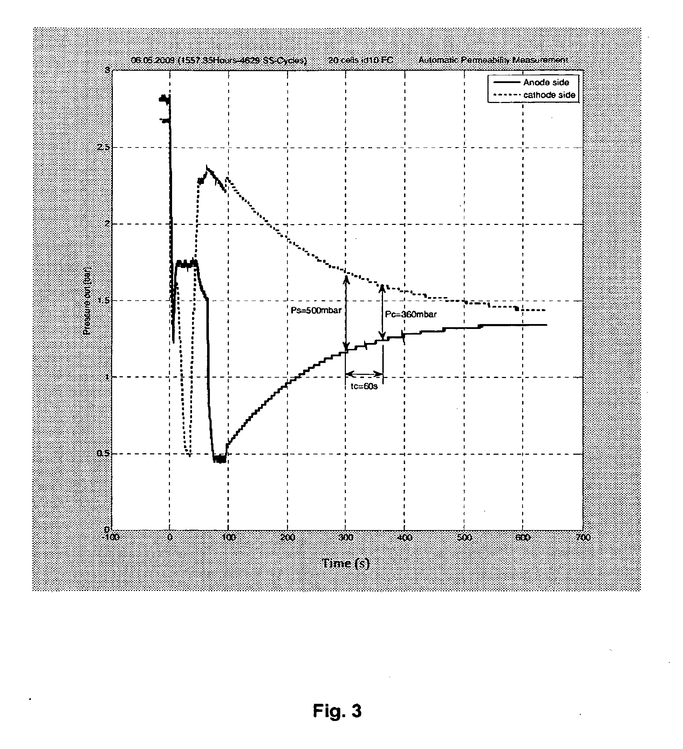

Si l'on se reporte à la figure 3, donnant l'évolution des pressions côté anode et côté cathode sur une période plus longue que la figure 2 comprenant la procédure d'extinction décrite ci-dessus et s'étendant aux quelques 10 minutes qui suivent, l'écart entre ces courbes donne directement la mesure de la différence de pression entre ces deux circuits. On voit qu'une valeur de seuil $P_S$ de 500 mbar est atteinte environ au temps 300 secondes, soit 225 secondes après la fin de la procédure d'extinction. Ensuite, on relève systématiquement, c'est-à-dire à chaque arrêt de la pile à combustible, la différence de pression au bout d'une période de temps supplémentaire $t_C$ valant par exemple 60 secondes, ce qui donne dans cet exemple, c'est-à-dire pour la pile à combustible utilisée pour relever les courbes des figures 2 et 3, une pression de contrôle $P_C$ valant 360 mbar, c'est-à-dire une chute de la différence de pression aux circuits anodique et cathodique valant 140 mbar.

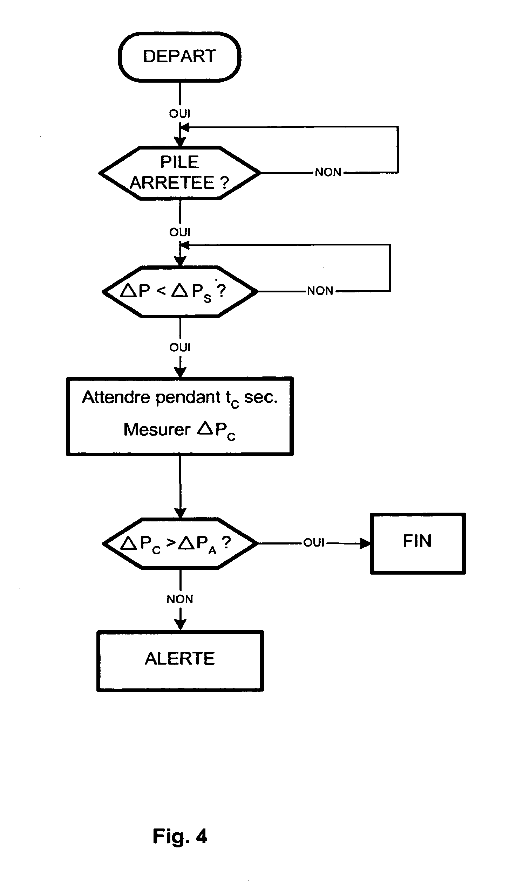

Ainsi, l'invention propose une procédure de détection de l'état de perméabilité de la membrane polymère échangeuse d'ions d'une pile à combustible dans laquelle, dès que la différence de pression $\Delta P$ dans les circuits anodique et cathodique tombe à une valeur inférieure à une valeur de seuil $\Delta P_S$ (voir figure 4, la pile étant considérée comme arrêtée, test sur $\Delta P$), la variation de pression dans lesdits circuits pendant une période de temps prédéterminée $t_C$ (voir, à la figure 4, « attendre pendant $t_C$ secondes ») est mesurée (voir, à la figure 4, « mesurer $\Delta P_C$ ») et la valeur de la différence de pression dans ces circuits au bout d'une période de temps prédéterminée, appelée valeur pression de contrôle $P_C$ est calculée et une alerte lorsque la pression de contrôle $P_C$ est inférieure à un seuil d'alerte $P_A$ est donnée.

Il suffit donc d'établir un plan d'expérience permettant de corréler les valeurs de pression de contrôle $P_C$ valant au bout d'une période de temps prédéterminée $t_C$ aux dégradations de la membrane échangeuse d'ion, ce qui permet un suivi automatisé du vieillissement de la pile à combustible. Pour que cette mesure soit significative il faut assurer que peuvent être reproduits de façon identique les paramètres initiaux qui influencent la dynamique avec laquelle la pression des gaz s'équilibre, par exemple la nature des gaz, leur pression, leur température ainsi que celle de la pile à combustible. Les constations expérimentales du déposant indiquent que, en pratique, on peut par exemple fixer la pression d'alerte $P_A$ à 400 mbar.

En ce qui concerne la nature des gaz et la pression, la procédure d'arrêt décrite plus haut procure de bonnes conditions et permet une très bonne répétabilité, à savoir hydrogène pur à l'anode à une pression de 500mbara et azote pur à la cathode à une pression de 2.2 bara. Il faut en effet garantir que les gaz en présence ne permettent pas d'activité électrochimique, ce qui rendrait inopérable la mesure de perméabilité par variation de pression. En ce qui concerne la température, la température de fonctionnement d'une pile à combustible est généralement contrôlée pour rester à une température nominale. Si la pile à combustible devait être arrêtée avant qu'elle n'ait pu atteindre sa température nominale, il conviendrait alors de ne pas procéder à la mesure de perméabilité car le résultat ne serait pas représentatif, la perméabilité des membranes PEFC étant dépendante de la température. L'humidité affecte également la perméabilité des membranes mais ce paramètre est nécessairement contrôlé par ailleurs dans le fonctionnement normal de la pile et il peut donc être considéré constant. Il est également bien entendu que les circuits anodiques et cathodiques doivent être fermés pendant la mesure de façon à ce qu'il n'y ai pas d'échange de gaz avec le milieu ambiant ou avec les réservoirs ce qui fausserait complètement la mesure de perméabilité. Ceci signifie que les vannes 128, 122, 120, 127, 118, 110 et 117 doivent être fermées.

Les circuits anodiques et cathodiques de la pile à combustible doivent bien entendu présenter une excellente étanchéité vis à vis de l'ambiant, faute de quoi les variations de pression seraient perturbés par des échanges avec l'extérieur et cela rendrait la mesure de perméabilité inopérable. En outre les pompes de recirculation 115 et 125 ainsi que la pompe de gavage 129 doivent être arrêtées de façon à ne pas perturber la mesure.

A titre d'exemple d'une mise en oeuvre avantageuse de l'invention, puisque l'étanchéité du stack vis à vis de l'ambiant est une condition nécessaire pour pouvoir mesurer la perméabilité des membranes, il est proposé de, lors de chaque arrêt, vérifier comment évolue la somme, éventuellement pondérée, (ou la moyenne, éventuellement pondérée) de la pression dans le circuit cathodique et de la pression dans le circuit anodique et de valider la mesure de la dynamique si la somme (ou la moyenne) reste sensiblement constante pendant une période de temps prédéterminée. Si les circuits anode et cathode ont des volumes différents, il faudrait pondérer les pressions respectives pour le calcul de la pression moyenne. Abstraction faite de la variation de pression due à la lente variation possible de température, si les deux circuits anode et cathode sont étanches vis à vis de l'ambiant, la somme (ou la moyenne) doit rester sensiblement constante. Autrement dit, la pression moyenne doit rester stable. En dehors de la mesure de perméabilité, il est toujours intéressant de savoir si une fuite est apparue dans la pile à combustible.

## Revendications

1.  Procédure de détection de l'état de perméabilité de la membrane polymère échangeuse d'ions d'une pile à combustible, la pile à combustible (1) étant formée par un empilage de cellules électrochimiques ayant chacune une anode et une cathode de part et d'autre d'une membrane polymère échangeuse d'ion, la pile à combustible ayant un système d'alimentation en gaz carburant côté anode des cellules électrochimiques et un système d'alimentation en gaz comburant côté cathode des cellules électrochimiques, la procédure consistant à, lors de chaque arrêt de la pile à combustible, mesurer la dynamique avec laquelle la pression régnant dans le circuit anodique et la pression régnant dans le circuit cathodique s'équilibrent et dans laquelle, dès que la différence de pression dans les circuits anodique et cathodique tombe à une valeur inférieure à une valeur de seuil $P_S$, la variation de pression dans lesdits circuits pendant une période de temps prédéterminée $t_C$ est mesurée et la valeur de la différence de pression dans ces circuits au bout d'une période de temps prédéterminée, appelée valeur pression de contrôle $P_C$ est calculée et une alerte lorsque la pression de contrôle $P_C$ est inférieure à un seuil d'alerte $P_A$ est donnée.

2.  Procédure de détection de l'état de perméabilité de la membrane polymère échangeuse d'ions d'une pile à combustible selon la revendication 1 dans laquelle la valeur de seuil $P_S$ vaut 500 mbar.

3. Procédure de détection de l'état de perméabilité de la membrane polymère échangeuse d'ions d'une pile à combustible selon la revendication 2, dans laquelle la pression d'alerte $P_A$ vaut 100 mbar.

4. Procédure de détection de l'état de perméabilité de la membrane polymère échangeuse d'ions d'une pile à combustible selon l'une des revendications précédentes, précédée d'une procédure d'arrêt de la pile à combustible (1), la pile à combustible délivrant une tension électrique sur une ligne électrique de puissance (10), la procédure d'arrêt comprenant les actions suivantes :

    • (i) coupure de l'alimentation en gaz carburant et en gaz comburant, et
    • (ii) maintien d'un prélèvement de courant tant qu'un révélateur approprié indique que le gaz comburant dans le système d'alimentation en gaz comburant n'est pas suffisamment consommé ;
    • (iii) injection de gaz enrichi en azote dans le système d'alimentation en gaz comburant.

5. Procédure de détection de l'état de perméabilité de la membrane polymère échangeuse d'ions d'une pile à combustible selon l'une des revendications précédentes, pour pile à combustible comportant un système d'alimentation en gaz comburant côté cathode des cellules électrochimiques, le système d'alimentation en gaz comburant comportant à la fois une vanne de coupure (120) disposée à la sortie d'un réservoir de stockage (12T) pour l'oxygène et un dispositif de remplissage en air atmosphérique pressurisé et un circuit de recyclage (12R) branché à la sortie du circuit cathodique de la pile à combustible (1), avec un séparateur d'eau (124) avant un retour et un branchement sur la canalisation d'alimentation en gaz comburant.

6. Procédure de détection de l'état de perméabilité de la membrane polymère échangeuse d'ions d'une pile à combustible selon l'une des revendications précédentes dans laquelle, lors de chaque arrêt, on observe l'évolution de la somme pondérée de la pression dans le circuit cathodique et de la pression dans le circuit anodique et l'on valide la mesure de la dynamique si la somme reste sensiblement constante pendant une période de temps prédéterminée.

7. Procédure de détection de l'état de perméabilité de la membrane polymère échangeuse d'ions d'une pile à combustible selon l'une des revendications 1 à 5 dans laquelle, lors de chaque arrêt, on observe l'évolution de la moyenne pondérée de la pression dans le circuit cathodique et de la pression dans le circuit anodique et l'on valide la mesure de la dynamique si la moyenne reste sensiblement constante pendant une période de temps prédéterminée.

8. Procédure de détection de l'état de perméabilité de la membrane polymère échangeuse d'ions d'une pile à combustible selon la revendication 4, dans laquelle les actions (i), (ii) et (iii) sont concomitantes.

9. Procédure de détection de l'état de perméabilité de la membrane polymère échangeuse d'ions d'une pile à combustible selon la revendication 4, dans laquelle les actions (ii) et (iii) sont des étapes successives, les deux actions (i) et (ii) étant concomitantes.

10. Procédure de détection de l'état de perméabilité de la membrane polymère échangeuse d'ions d'une pile à combustible selon la revendication 4, comportant en outre, après l'action (iii), une étape d'aspiration de gaz carburant.

11. Procédure de détection de l'état de perméabilité de la membrane polymère échangeuse d'ions d'une pile à combustible selon la revendication 4, pour pile à combustible alimentée en oxygène pur comme comburant, le gaz enrichi en azote étant l'air atmosphérique.

12. Procédure de détection de l'état de perméabilité de la membrane polymère échangeuse d'ions d'une pile à combustible selon la revendication 4, dans laquelle l'action d'interruption de l'alimentation en gaz carburant est différée par rapport à l'action d'interruption de l'alimentation en gaz comburant.

13. Procédure de détection de l'état de perméabilité de la membrane polymère échangeuse d'ions d'une pile à combustible selon la revendication 4, dans laquelle l'alimentation en gaz comburant et en gaz carburant sont interrompues simultanément.

14. Procédure de détection de l'état de perméabilité de la membrane polymère échangeuse d'ions d'une pile à combustible selon la revendication 4, dans laquelle le prélèvement de courant est d'abord établi à un premier niveau puis il est réduit en même temps que certaines cellules de la pile à combustible commencent à descendre en tension et s'annule finalement lorsque la tension de la pile à combustible approche de 0V.

**Patentansprüche**

1. Verfahren zur Erfassung des Permeabilitätszustands der Ionentauscher-Polymermembran einer Brennstoffzelle, wobei die Brennstoffzelle (1) von einer Stapelung elektrochemischer Zellen geformt wird, die je eine Anode und eine Kathode zu beiden Seiten einer Ionentauscher-Polymermembran haben, wobei die Brennstoffzelle ein System zur Versorgung mit Treibgas auf der Anodenseite der elektrochemischen Zellen und ein System zur Versorgung mit brandförderndem Gas auf der Kathodenseite der elektrochemischen Zellen hat, wobei das Verfahren darin besteht, bei jedem Abschalten der Brennstoffzelle die Dynamik zu messen, mit der der im Anodenkreislauf herrschende Druck und der im Kathodenkreislauf herrschende Druck sich ausgleichen, und wobei, sobald die Druckdifferenz im Anoden- und Kathodenkreislauf auf einen Wert unterhalb eines Schwellwerts $P_S$ fällt, die Druckänderung in den Kreisläufen während einer vorbestimmten Zeitdauer $t_C$ gemessen wird, und der Wert des Druckunterschieds in diesen Kreisläufen nach einer vorbestimmten Zeitdauer, Kontrolldruckwert $P_C$ genannt, berechnet wird, und ein Alarm ausgelöst wird, wenn der Kontrolldruck $P_C$ niedriger als eine Alarmschwelle $P_A$ ist.

2. Verfahren zur Erfassung des Permeabilitätszustands der Ionentauscher-Polymermembran einer Brennstoffzelle nach Anspruch 1, wobei der Schwellwert $P_S$ 500 mbar beträgt.

3. Verfahren zur Erfassung des Permeabilitätszustands der Ionentauscher-Polymermembran einer Brennstoffzelle nach Anspruch 2, wobei der Alarmdruck $P_A$ 100 mbar beträgt.

4. Verfahren zur Erfassung des Permeabilitätszustands der Ionentauscher-Polymermembran einer Brennstoffzelle nach einem der vorhergehenden Ansprüche, vor dem ein Verfahren des Abschaltens der Brennstoffzelle (1) liegt, wobei die Brennstoffzelle eine elektrische Spannung auf einer elektrischen Leistungsleitung (10) liefert, wobei das Abschaltverfahren die folgenden Aktionen enthält:

   • (i) Unterbrechung der Versorgung mit Treibgas und mit brandförderndem Gas, und
   • (ii) Aufrechterhaltung einer Stromentnahme, so lange ein geeigneter Indikator anzeigt, dass das brandfördernde Gas im System zur Versorgung mit brandförderndem Gas nicht ausreichend verbraucht ist;
   • (iii) Einspeisung von mit Stickstoff angereichertem Gas in das System zur Versorgung mit brandförderndem Gas.

5. Verfahren zur Erfassung des Permeabilitätszustands der Ionentauscher-Polymermembran einer Brennstoffzelle nach einem der vorhergehenden Ansprüche für eine Brennstoffzelle, die ein System zur Versorgung mit brandförderndem Gas auf der Kathodenseite der elektrochemischen Zellen aufweist, wobei das System zur Versorgung mit brandförderndem Gas sowohl ein Abschaltventil (120), das am Ausgang eines Speicherbehälters (12T) für den Sauerstoff angeordnet ist, als auch eine Füllvorrichtung mit atmosphärischer Druckluft und einen Rückführkreislauf (12R) aufweist, der an den Ausgang des Kathodenkreislaufs der Brennstoffzelle (1) angeschlossen ist, mit einem Wasserabscheider (124) vor einer Rückführung und einem Anschluss an die Rohrleitung zur Versorgung mit brandförderndem Gas.

6. Verfahren zur Erfassung des Permeabilitätszustands der Ionentauscher-Polymermembran einer Brennstoffzelle nach einem der vorhergehenden Ansprüche, wobei bei jedem Abschalten die Entwicklung der gewichteten Summe des Drucks im Kathodenkreislauf und des Drucks im Anodenkreislauf beobachtet und der Messwert der Dynamik validiert wird, wenn die Summe während eines vorbestimmten Zeitraums im Wesentlichen konstant bleibt.

7. Verfahren zur Erfassung des Permeabilitätszustands der Ionentauscher-Polymermembran einer Brennstoffzelle nach einem der Ansprüche 1 bis 5, wobei bei jedem Abschalten die Entwicklung des gewichteten Mittelwerts des Drucks im Kathodenkreislauf und des Drucks im Anodenkreislauf beobachtet und der Messwert der Dynamik validiert wird, wenn der Mittelwert während eines vorbestimmten Zeitraums im Wesentlichen konstant bleibt.

8. Verfahren zur Erfassung des Permeabilitätszustands der Ionentauscher-Polymermembran einer Brennstoffzelle nach Anspruch 4, wobei die Aktionen (i), (ii) und (iii) gleichzeitig stattfinden.

9. Verfahren zur Erfassung des Permeabilitätszustands der Ionentauscher-Polymermembran einer Brennstoffzelle nach Anspruch 4, wobei die Aktionen (ii) und (iii) aufeinanderfolgende Schritte sind, während die zwei Aktionen (i) und (ii) gleichzeitig stattfinden.

10. Verfahren zur Erfassung des Permeabilitätszustands der Ionentauscher-Polymermembran einer Brennstoffzelle nach Anspruch 4, das außerdem nach der Aktion (iii) einen Schritt der Ansaugung von Treibgas aufweist.

11. Verfahren zur Erfassung des Permeabilitätszustands der Ionentauscher-Polymermembran einer Brennstoffzelle nach Anspruch 4 für eine Brennstoffzelle, die mit reinem Sauerstoff als brandförderndem Mittel versorgt wird, wobei das mit Stickstoff angereicherte Gas die atmosphärische Luft ist.

12. Verfahren zur Erfassung des Permeabilitätszustands der Ionentauscher-Polymermembran einer Brennstoffzelle nach Anspruch 4, wobei die Aktion der Unterbrechung der Versorgung mit Treibgas bezüglich der Aktion der Unterbrechung der Versorgung mit brandförderndem Gas verzögert ist.

13. Verfahren zur Erfassung des Permeabilitätszustands der Ionentauscher-Polymermembran einer Brennstoffzelle nach Anspruch 4, wobei die Versorgung mit brandförderndem Gas und mit Treibgas gleichzeitig unterbrochen werden.

14. Verfahren zur Erfassung des Permeabilitätszustands der Ionentauscher-Polymermembran einer Brennstoffzelle nach Anspruch 4, wobei die Stromentnahme zunächst auf einem ersten Pegel aufgebaut und dann gleichzeitig damit reduziert wird, dass in bestimmten Zellen der Brennstoffzelle die Spannung zu sinken beginnt und schließlich zu Null wird, wenn die Spannung der Brennstoffzelle sich 0V annähert.

**Claims**

1. Procedure for detecting the permeability state of the polymeric ion-exchange membrane of a fuel cell stack, the fuel cell stack (1) being formed by stacking electrochemical cells each having an anode and a cathode on either side of a polymeric ion-exchange membrane, the fuel cell stack having a fuel gas supply system on the anode side of the electrochemical cells and an oxidant gas supply system on the cathode side of the electrochemical cells, the procedure consisting, upon each shut-down of the fuel cell stack, in measuring the dynamic behaviour whereby the pressure in the anode circuit and the pressure in the cathode circuit come to equilibrium and in which, as soon as the pressure difference in the anode and cathode circuits drops to a value below a threshold value $P_S$ the pressure variation in said circuits during a predetermined time period $t_C$ is measured and the pressure difference in these circuits at the end of a predetermined time period, called the control pressure $P_C$, is calculated and a warning is given when the control pressure $P_C$ is below a warning threshold $P_A$.

2. Procedure for detecting the permeability state of the polymeric ion-exchange membrane of a fuel cell stack according to Claim 1, in which the threshold value $P_S$ is equal to 500 mbar.

3. Procedure for detecting the permeability state of the polymeric ion-exchange membrane of a fuel cell stack according to Claim 2, in which the warning pressure $P_A$ is equal to 400 mbar.

4. Procedure for detecting the permeability state of the polymeric ion-exchange membrane of a fuel cell stack according to one of the preceding claims, preceded by a procedure for shutting down the fuel cell stack (1), the latter delivering an electrical voltage to an electrical power line (10), the shut-down procedure comprising the following actions:

• (i) the supply of fuel gas and oxidant gas is cut off;
• (ii) current continues to be drawn as long as an appropriate indicator indicates that the oxidant gas in the oxidant gas supply system has not been sufficiently consumed; and
• (iii) nitrogen-enriched gas is injected into the oxidant gas supply system.

5. Procedure for detecting the permeability state of the polymeric ion-exchange membrane of a fuel cell stack according to one of the preceding claims, for a fuel cell stack comprising an oxidant gas supply system on the cathode side of the electrochemical cells, the oxidant gas supply system comprising at the same time a shut-off valve (120) placed at the outlet of an oxygen storage tank (12T) and a device for filling with pressurized atmospheric air and a recycling circuit (12R) connected to the outlet of the cathode circuit of the fuel cell stack (1), with a water separator (124) before a return and a connection to the oxidant gas supply line.

6. Procedure for detecting the permeability state of the polymeric ion-exchange membrane of a fuel cell stack according to one of the preceding claims, in which, upon each shut-down, the variation in the weighted sum of the pressure in the cathode circuit and of the pressure in the anode circuit is observed and the measurement of the dynamic behaviour is validated if the sum remains substantially constant for a predetermined time period.

7. Procedure for detecting the permeability state of the polymeric ion-exchange membrane of a fuel cell stack according to one of Claims 1 to 5, in which, upon each shut-down, the evolution of the weighted average of the pressure in the cathode circuit and of the pressure in the anode circuit is observed and the measurement of the dynamic behaviour is validated if the average remains substantially constant for a predetermined time period.

8. Procedure for detecting the permeability state of the polymeric ion-exchange membrane of a fuel cell stack, according to Claim 4, in which the actions (i), (ii) and (iii) are concomitant.

9. Procedure for detecting the permeability state of the polymeric ion-exchange membrane of a fuel cell stack, according to Claim 4, in which the actions (ii) and (iii) are successive steps, the two actions (i) and (ii) being concomitant.

10. Procedure for detecting the permeability state of the polymeric ion-exchange membrane of a fuel cell stack, according to Claim 5, which further includes, after the action (iii), a fuel gas suction step.

11. Procedure for detecting the permeability state of the polymeric ion-exchange membrane of a fuel cell stack, according to Claim 4, for a fuel cell stack supplied with pure oxygen as oxidant, the nitrogen-enriched gas being the atmospheric air.

12. Procedure for detecting the permeability state of the polymeric ion-exchange membrane of a fuel cell stack, according to Claim 4, in which the action of interrupting the fuel gas supply is delayed relative to the action of interrupting the oxidant gas supply.

13. Procedure for detecting the permeability state of the polymeric ion-exchange membrane of a fuel cell stack, according to Claim 4, in which the supply of oxidant gaz and the fuel gas supply are interrupted simultaneously.

14. Procedure for detecting the permeability state of the polymeric ion-exchange membrane of a fuel cell stack, according to Claim 4, in which the current draw is firstly set at a first level, it is then reduced at the same time as certain cells of the fuel cell stack start to drop in voltage, and finally it becomes zero when the voltage of the fuel cell stack approaches 0 V.

EP 2 494 644 B1

Fig. 1

13

**Fig. 2**

**Fig. 3**

**Fig. 4**

**EP 2 494 644 B1**

## RÉFÉRENCES CITÉES DANS LA DESCRIPTION

### Documents brevets cités dans la description

- US 2004124843 A
- WO 2006012954 A
- US 20090220832 A
- JP 2009146651 A